# EUROPÄISCHE PATENTSCHRIFT

(11) **EP 3 607 220 B1**
(45) Veröffentlichungstag und Bekanntmachung des Hinweises auf die Patenterteilung: **07.07.2021**
(21) Anmeldenummer: 18717308.3
(22) Anmeldetag: 06.04.2018
(51) Int. Cl.: F16C 33/78, F16C 19/38, F16C 33/80, F16C 33/60

(54) **KEGELROLLENLAGER SOWIE WINDKRAFTANLAGE**
TAPER ROLLER BEARINGS AND WIND TURBINE
ROULEMENTS À ROULEAUX CONIQUES ET EOLIENNE

(30) Priorität: 07.04.2017 DE 102017107553
(43) Veröffentlichungstag der Anmeldung: 12.02.2020
(73) Patentinhaber: thyssenkrupp rothe erde Germany GmbH, 44137 Dortmund (DE); thyssenkrupp AG, 45143 Essen (DE)
(72) Erfinder: PILK, Bernfried, 59597 Erwitte (DE); SANTORO, Simone Angelo, 59558 Lippstadt (DE)
(74) Vertreter: thyssenkrupp Intellectual Property GmbH
(86) Internationale Anmeldenummer: PCT/EP2018/058867
(87) Internationale Veröffentlichungsnummer: WO 2018/185288

(56) Entgegenhaltungen:
- EP-A1- 2 669 541
- EP-A1- 3 048 319
- DE-A1-102012 212 792
- DE-A1-102013 208 203
- DE-A1-102014 104 863
- DE-A1-102014 205 811

## Beschreibung

Die Erfindung betrifft ein Kegelrollenlager, insbesondere ein Kegelrollengroßwälzlager mit einem Innenring, einem Außenring und zwei Reihen von Kegelrollen, die in einer O-Anordnung zwischen dem Innenring und Außenring angeordnet sind, wobei der Innenring sich in einer axialen Richtung über eine größere Länge als der Außenring erstreckt und wobei ein Spalt zwischen Innenring und Außenring an zumindest einer Seite durch eine Dichtungsanordnung abgedichtet ist.

Gegenstand der Erfindung ist des Weiteren auch eine Windkraftanlage mit einem auf einem Turm angeordneten Maschinengehäuse und einen Rotorblätter tragenden Rotor, wobei der Rotor mit dem Kegelrollenlager gegenüber dem Maschinengehäuse drehbar gelagert ist. Das Kegelrollenlager bildet somit das Rotorlager, welches bei einer Windkraftanlage auch als Hauptlager bezeichnet wird.

Das Kegelrollenlager ist vorzugsweise als Kegelrollengroßwälzlager ausgeführt. Als Großwälzlager werden im Rahmen der Erfindung Wälzlager bezeichnet, welche einen Laufkreisdurchmesser von mehr als 500 mm und üblicherweise auch mehr als 1000 mm aufweisen.

Bei der Auslegung eines Großwälzlagers ergeben sich spezifische Anforderungen. Allein aufgrund ihrer Größe und der aufzunehmenden Belastungen ergeben sich ein großer Materialbedarf und ein hohes Gewicht, welches im eingebauten Zustand durch eine entsprechende Tragkonstruktion aufgenommen werden muss. Auch die Material- und Fertigungskosten sind bei der Herstellung von Großwälzlagern erheblich, insbesondere weil der Innenring sowie der Außenring häufig aus um den Umfang nahtlos gewalzten Ringen gebildet sind und die Laufflächen für die Wälzkörper einer zusätzlichen Härtung unterzogen sind.

Während kleine Wälzlager häufig als leicht auszutauschende Verschließteile ausgelegt sind, sind bei Großwälzlagern eine große Langlebigkeit sowie eine einfache Wartung und Instandsetzung ohne einen vollständigen Ausbau von Vorteil, weil Großwälzlager aufgrund ihres Gewichtes und ihrer Größe nur mit einem erheblichen Aufwand gehandhabt und ausgewechselt werden können. Dies gilt insbesondere für Großwälzlager, die bei einer Windkraftanlage als Hauptlager den die Rotorblätter tragenden Rotor abstützen.

Bei dem Einsatz an einer Windkraftanlage muss das Kegelrollenlager Radialkräfte, Axialkräfte und insbesondere auch erhebliche Kippmomente aufnehmen. Bei einem im Wesentlichen horizontal ausgerichteten Rotor können Kippmomente einerseits aus dem Gewicht der angeschlossenen Komponenten als auch andererseits aus über die Höhe unterschiedlichen Windlasten resultieren.

Um die entsprechenden Belastungen aufnehmen zu können, haben sich in der Praxis zweireihige Kegelrollenlager mit einer O-Anordnung der beiden Reihen von Kegelrollen bewährt. Bei einer O-Anordnung sind die Schnittpunkte durch die Längsachse der Kegelrollen in den beiden Reihen in Richtung des Innenrings verschoben. Die Bezeichnung O-Anordnung ergibt sich daraus, dass die den beiden Reihen zugeordneten Drucklinien in einem Querschnitt im weitesten Sinne eine O-Form bilden.

Um die Kegelrollen zwischen dem Innenring und dem Außenring anordnen zu können, ist der Innenring in axialer Richtung üblicherweise zumindest zweigeteilt, während der im Querschnitt eine Nasenform aufweisende Außenring einteilig gebildet werden kann. Je nach Anforderungen kommt jedoch auch für den Außenring eine in axialer Richtung mehrteilige Ausgestaltung in Betracht, wobei Innenring und Außenring auch in Umfangrichtung aus mehreren Segmenten gebildet sein können.

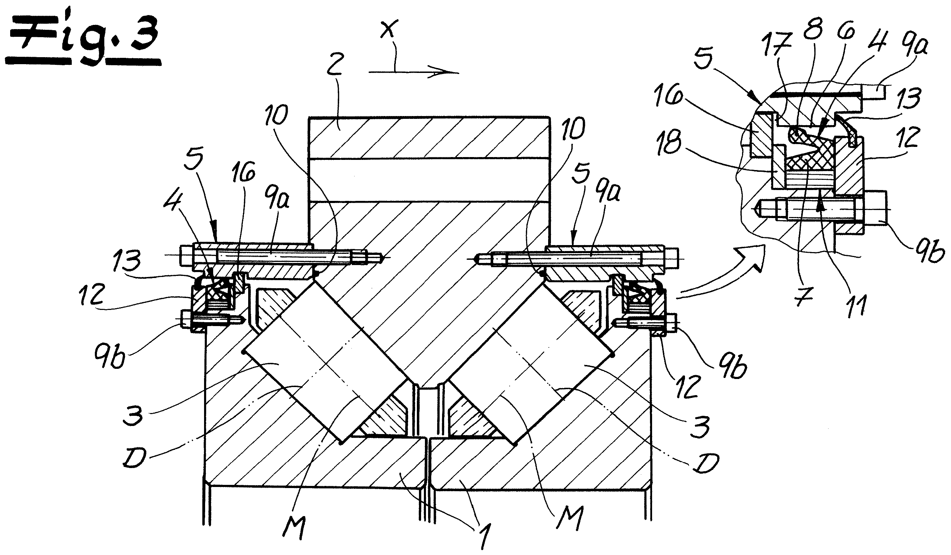

Gattungsgemäße Kegelrollenlager, welche als Hauptlager einer Windkraftanlage eingesetzt werden, sind aus der DE 10 2009 014 923 C5 sowie der WO 2007/119953 A1 (Fig. 3) bekannt.

Bei den bekannten gattungsgemäßen Kegelrollenlagern ist an den beiden Seiten des Kegelrollenlagers jeweils eine Dichtungsanordnung vorgesehen, welche den Spalt zwischen Innenring und Außenring abdichtet. Eine Dichtung in Form eines Dichtringes ist bei beiden Dichtungsanordnungen über jeweils einen Haltering an dem Außenring des Kegelrollenlagers drehfest angeschlossen. Die mit dem Außenring drehfest verbundene Dichtung kann beispielsweise nach Art eines Wellendichtringes mit einem federnden Dichtschenkel bzw. einer Dichtlippe ausgeführt sein. Eine Dichtungslauffläche für die Dichtung wird von einer radialen Außenfläche des in axialer Richtung geteilten Innenringes gebildet.

Gemäß der DE 10 2009 014 923 C5 kann die Dichtungslauffläche als Anlauffläche für die Dichtung gehärtet und mit hoher Präzision gefertigt sein, wozu die Dichtungslauffläche beispielsweise drallfrei geschliffen werden kann. Durch entsprechende Maßnahmen sollen geringe Reibwerte sowie ein geringer Verschleiß erzielt werden.

Entsprechende Bearbeitungen an einer radialen Außenfläche des Innenrings sind aufwändig. Bei einer Beschädigung der Dichtungslauffläche durch Verschleiß oder bei einer mechanischen Beschädigung während der Montage muss das gesamte Kegelrollenlager ausgewechselt werden, wenn eine ausreichende Dichtigkeit nicht mehr gewährleistet ist.

Aus DE 10 2013 208 203 A1 ist ein Wälzlager mit einem an einer Oberfläche des Innenrings angeordneten Dichtungsring bekannt, wobei an dem Außenring eine Ausnehmung ausgebildet und angeordnet ist, um einen überwiegenden Teil einer freiliegenden Oberfläche des Dichtungsrings berührungsfrei zu umgeben, sodass durch den Dichtungsring und die Ausnehmung eine Labyrinthdichtung gebildet wird.

EP 3 048 319 A1 beschreibt ein Wälzlager mit einer in den Innenring integrierten Öldichtung, die Zusammenbau und Demontage vereinfacht, sowie Schmiermittel im Inneren des Lagers hält und Eintreten von Verschmutzungen verhindert.

DE 10 2012 212 792 A2 beschreibt eine wartungsfreie Lageranordnung für einen Generator einer Windkraftanlage, bei der das Rollenlager durch eine berührungslose Dichtung abgedichtet ist.

Aus DE 10 2014 205 811 A1 ist eine Lageranordnung mit Dichtring bekannt, der einen Lagerinnenraum abdichtet und zumindest eine ringförmige Dichtlippe mit einer ringförmigen Dichtkante aufweist, die dazu ausgelegt ist, axial gegen den ersten oder zweiten Lagerring abstützbar zu sein.

DE 10 2014 104 863 A1 beschreibt eine Wälzlageranordnung mit einem Außenring, einem Innenring und einer Laufbahn, in welcher eine Mehrzahl von Wälzkörpern angeordnet ist, wobei die Laufbahn zwischen einem ersten Ringfortsatz des Außenrings und einem zweiten Ringfortsatz des Innenrings ausgebildet ist und wobei der zweite Ringfortsatz den ersten Ringfortsatz entlang einer zur Rotationsachse radialen Richtung hintergreift.

EP 2 669 541 A1 beschreibt ein Kegelrollenlager mit einer Dichtung. Um den Druck auf die Dichtung zu minimieren ist eine Eingangsöffnung eines Fettauslasskanals an der rollenzugewandten axialen Seite des Innenrings zwischen dem äußeren Rand der inneren Laufbahn und dem radial äußeren Rand des Innenrings angeordnet. Durch die Rollenbewegung wird überschüssiges Fett in den Auslasskanal gepumpt bevor es die Dichtung erreicht.

Vor diesem Hintergrund liegt der vorliegenden Erfindung die Aufgabe zugrunde, ein gattungsgemäßes Kegelrollenlager derart weiterzubilden, dass zusätzlich zu einer hohen Langlebigkeit auch noch erweiterte Wartungsmöglichkeiten bereitgestellt werden. Des Weiteren soll eine Windkraftanlage mit einem solchen Kegelrollenlager angegeben werden, wobei gerade bei Windkraftanlagen ein Lagerwechsel mit einem sehr großen Aufwand verbunden ist.

Gegenstand der Erfindung und Lösung der Aufgabe sind ein Kegelrollenlager gemäß Patentanspruch 1 sowie eine Windkraftanlage gemäß Patentanspruch 13.

Ausgehend von einem gattungsgemäßen Kegelrollenlager ist demnach erfindungsgemäß vorgesehen, dass die Dichtungsanordnung eine drehfest an den Innenring angeschlossene Hauptdichtung sowie einen an den Außenring drehfest angeschlossenen Dichtungslaufring umfasst, wobei der Dichtungslaufring eine Dichtungslauffläche für die Hauptdichtung bildet.

Im Rahmen der Erfindung vereint der Dichtungslaufring mehrere Funktionen. Einerseits erlaubt der Dichtungslaufring eine Überbrückung eines axialen Abstandes, um die unterschiedliche Länge von Außenring und Innenring auszugleichen. Der Außenring kann dabei so schmal wie möglich gebildet werden, wobei die Breite des Innenringes durch die Position der Laufflächen der beiden Reihen von Kegelrollen bestimmt wird.

Des Weiteren bildet der Dichtungslaufring auch die Dichtungslauffläche für die Hauptdichtung. Der separat gefertigte und an den Außenring angeschlossene Dichtungslaufring kann auch ohne eine Demontage des gesamten Kegelrollenlagers nachträglich noch gelöst und gegebenenfalls ausgetauscht oder bearbeitet werden. Es ergibt sich somit der Vorteil, dass der Dichtungslaufring mit der daran gebildeten Dichtungslauffläche bei einem Verschleiß ausgetauscht oder auch nachgearbeitet werden kann. Bei einer Wartung muss lediglich die Dichtungsanordnung zumindest teilweise demontiert werden, wobei jedoch die üblicherweise in axialer Richtung zumindest zweigeteilte Innenring sowie der Außenring in ihrer Montageposition verbleiben können.

Es ergibt sich auch der Vorteil, dass der Dichtungslaufring aufgrund seiner im Vergleich zu dem Innenring und dem Außenring kleinen Querschnittsfläche viel leichter gehandhabt werden kann. Auch eine Feinbearbeitung, Beschichtung oder Härtung der Dichtungslauffläche wird somit erheblich erleichtert, wobei eine Beschichtung auch nach einer Demontage ohne weiteres erneuert werden kann.

Schließlich kann das Material des Dichtungslaufringes auch unter Berücksichtigung der spezifischen Anforderungen ausgewählt werden und kann sich insbesondere den dem Material des Innenringes sowie des Außenringes unterscheiden. Es kann beispielsweise ein Material ausgewählt werden, welches zur Bildung einer besonders glatten Dichtungslauffläche geeignet ist und in Kombination mit dem Material der Hauptdichtung einen besonders geringen Reibwert aufweist.
Üblicherweise ist der Dichtungslaufring aus Metall gebildet, wobei aber je nach den auftretenden Belastungen auch andere Materialien einschließlich Kunststoffe und Verbundwerkstoffe in Betracht kommen.

Da der Dichtungslaufring als separates Teil gebildet ist, kann auch leicht die Geometrie an die jeweiligen Erfordernisse angepasst werden. Im einfachsten Fall weist der Dichtungslaufring eine zylindrische Form auf. Ausgehend von einer solchen Grundform sind jedoch auch Variationen möglich. Wenn beispielsweise zwischen dem Außenring sowie der an dem Innenring angeordneten Hauptdichtung nicht nur ein Abstand in axialer Richtung, sondern auch in radialer Richtung zu überbrücken ist, kann der Dichtungslaufring auch eine Abwicklung aufweisen. Der Dichtungslaufring kann z.B. eine L-Form aufweisen. Des Weiteren kann im Bereich der Dichtungslauffläche auch eine Stufe vorgesehen sein, um eine Anpassung an die Abmessung der Hauptdichtung zu ermöglichen.

Gemäß der Erfindung ist vorgesehen, dass die Dichtungslauffläche von einer radialen Innenfläche des Dichtungslaufringes gebildet ist.

Schließlich sind auch andere von einer Zylinderform abweichende Variationen möglich.

Gemäß einer Weiterbildung der Erfindung ist vorgesehen, dass durch zueinander komplementäre Ausformungen an dem Innenring einerseits und dem Dichtungslaufring andererseits ein Labyrinth gebildet ist. An dem Innenring und dem Dichtungslaufring können beispielsweise mit einem axialen Versatz Vorsprünge vorgesehen sein, welche sich in radialer Richtung überlappen und somit ein Labyrinth bilden. Ein solches Labyrinth kann dazu vorgesehen sein, den Dichtungsspalt weiter zu schützen und eine Leckagerate eines Schmiermittels zu reduzieren.

Im Rahmen der Erfindung ist der Spalt zwischen Innenring und Außenring an zumindest einer Seite des Kegelrollenlagers durch die beschriebene Dichtungsanordnung abgedichtet. Üblicherweise ist jedoch eine solche Dichtungsanordnung an beiden Seiten des Kegelrollenlagers vorhanden, wobei das Kegelrollenlager gemäß einer üblichen Auslegung auch bezüglich einer Mittelebene spiegelsymmetrisch oder im Wesentlichen spiegelsymmetrisch ausgeführt sein kann.

Im Rahmen der Erfindung befindet sich die Dichtungsanordnung an zumindest einer Seite d. h. Stirnseite des Kegelrollenlagers, wobei vorzugsweise beide Stirnseiten mit einer entsprechenden Dichtungsanordnung versehen sind. Als Stirnseiten des Lagers werden im Rahmen der Erfindung die axialen Endbereich bezeichnet, welche in axialer Richtung an beiden Seiten des Außenringes anschließen.

Die Hauptdichtung ist vorzugsweise mit einem elastischen Kunststoff gebildet. Die Hauptdichtung kann dabei vollständig aus dem elastischen Kunststoff bestehen oder auch mit anderen Materialien kombiniert werden. Beispielsweise können auch elastische Federringe, Federn oder sonstige Einlagen aus Metall vorgesehen sein, um die Dichtungseigenschaften zu verbessern. Zusätzlich oder alternativ kann der elastische Kunststoff auch mit Zusatzstoffen und insbesondere verstärkenden Fasern versehen sein.

Als elastischer Kunststoff für die Hauptdichtung sind beispielweise Acrylnitril-Butadien-Kautschuk (NBR), hydrierter Acrylnitril-Butadien-Kautschuk (HNBR) Ethylen-Propylen-Dien-Kautschuk (EPDM) und Elastomere auf der Basis von Polyurethan geeignet. Die aufgezählten elastischen Kunststoffe sind lediglich exemplarisch. In Betracht kommen insbesondere Materialien, welche durch Vulkanisation vernetzt sind. Des Weiteren kommen jedoch auf thermoplastische Elastomere in Betracht.

Die Hauptdichtung kann insbesondere einen Dichtungsfuß sowie einen an den Dichtungsfuß anschließenden, elastisch federnden Dichtschenkel aufweisen, wobei der Dichtschenkel an der Dichtungslauffläche anliegt. Die Hauptdichtung kann beispielsweise die Bauform eines klassischen Wellendichtrings aufweisen, der auch optional mit einer Feder bzw. einer metallischen Einlage versehen ist.

Die Dichtungsanordnung kann zusätzlich zu der Hauptdichtung zumindest eine separate Nebendichtung umfassen. Beispielsweise kann die Hauptdichtung von der Stirnseite des Kegelrollenlagers aus gesehen hinter einer einfachen Staubschutzdichtung angeordnet sein, damit Verschmutzungen und insbesondere Partikel von der Hauptdichtung fern gehalten werden können.

Zusätzlich oder alternativ kann eine Nebendichtung auch in den Spalt zwischen der Hauptdichtung sowie den Kegelrollen vorgesehen sein.

Bei einer Schmierung des Kegelrollenlagers mit Öl oder Fett kann beispielweise zwischen den Kegelrollen einerseits und der Hauptdichtung andererseits eine Dichtung in Form einer Stopfbuchse vorgesehen sein, wobei insbesondere eine Filzdichtung geeignet ist. Auch andere Dichtungen und Wischelemente können vorgesehen sein, um die an der Dichtung stehende Fett- bzw. Ölmenge zu minimieren.

Der Dichtungslaufring ist mit Verbindungsmitteln drehfest an den Außenring angeschlossen. Als Verbindungselemente sind vorzugsweise Schrauben vorgesehen, welche in Sacklöcher des Außenrings eingreifen. Im Rahmen einer solchen Ausgestaltung kann der Dichtungslaufring nach einem Lösen der Schrauben demontiert werden, wobei die übrigen Bestandteile des Kegelrollenlagers, insbesondere der Außenring und der Innenring, im montierten Zustand verbleiben können. Grundsätzlich kommen jedoch auch andere Befestigungsarten in Betracht. Wenn beispielsweise an beiden Stirnseiten des Kegelrollenlagers die beschriebene Dichtungsanordnung vorgesehen ist, so können die beiden an dem Außenring einander gegenüberliegenden Dichtungslaufringe durch eine gemeinsame Schraubverbindung fixiert werden. Hierzu kann beispielsweise eine lange Schraube vorgesehen sein, welche dann beide Dichtungslaufringe durchgreift und mit einer Mutter gespannt wird. Grundsätzlich können die Dichtungslaufringe auch ohne separate Schrauben in einem Gehäuse geklemmt werden. Des Weiteren kann der zumindest ein Dichtungslaufring auch durch eine gemeinsame Schraubverbindung mit dem Außenring fixiert werden. Für eine einfache und genaue Positionierung des Dichtungslaufringes können auch Zentrierstifte oder andere Führungs- und Positioniermittel vorgesehen sein.

Zwischen dem Außenring und dem an zumindest einer Stirnseite drehfest angeschlossenen Dichtungslaufring ist vorzugsweise eine statische Dichtung vorgesehen, um an der Kontaktfläche zwischen Außenring und Dichtungslaufring einen Austritt von Schmiermitteln zu vermeiden. An eine solche statische Dichtung sind jedoch vergleichsweise geringe Anforderungen zu stellen. Beispielsweise kann ein einfacher O-Ring als statische Dichtung vorgesehen sein, wobei dann ein solcher O-Ring in einer Nut angeordnet ist, welche in den Außenring oder die zugeordnete Kontaktfläche des Dichtungslaufrings eingebracht ist.

Erfindungsgemäß ist die Hauptdichtung drehfest an den Innenring angeschlossen. Gemäß der Erfindung weist der Innenring eine stirnseitige Nut auf, in der die Hauptdichtung aufgenommen ist. Es kommen jedoch auch weitere Ausgestaltungen für eine Befestigung in Betracht, so kann die Hauptdichtung beispielsweise auch über einen separaten Verbindungsring drehfest an dem Innenring angeschlossen sein.

Die Fixierung der Hauptdichtung an dem Innenring erfolgt durch einen Klemmring oder um den Umfang aufeinanderfolgende Klemmsegmente. Eine solche Klemmanordnung ist durch Verbindungselemente, insbesondere Schrauben an dem Innenring befestigt, wobei der Innenring für die Aufnahme von Schrauben Sacklöcher aufweist. Bei der Verwendung von Klemmsegmenten zur Kraftbeaufschlagung der Hauptdichtung kann auch zwischen den um den Umfang aufeinanderfolgenden Klemmsegmenten ein Abstand oder Spalt verbleiben, wodurch bei der Montage ein Klemmen zwischen den Segmenten sicher vermieden werden kann.

Wenn die Hauptdichtung mittels Klemmring oder in anderer Weise durch eine Klemmverbindung gehalten ist, kann auch eine separate Nebendichtung gemeinsam mit der Hauptdichtung klemmend fixiert werden. So ist es möglich, entlang der Längsrichtung des Kegelrollenlagers gleiche oder auch in ihrer Struktur und Funktion unterschiedliche Dichtungen anzuordnen und gegebenenfalls gemeinsam zu klemmen.

Die Dichtungslauffläche, welche an einer radialen Innenfläche des Dichtungslaufringes gebildet ist, ist gemäß einer bevorzugten Ausgestaltung der Erfindung gehärtet.

Gerade bei Großwälzlagern wird unter Berücksichtigung des Herstellungsaufwandes als auch der Stabilität des Lagers häufig eine Randschichthärtung vorgesehen, die beispielsweise induktiv erfolgen kann. Wenn induktiv in einem Vorschub gehärtet wird, wird die Randschicht sukzessive als Ring gebildet. An der Nahtstelle zwischen dem Beginn und dem Ende der Härtung sind dann spezielle Schutzmaßnahmen möglich. Je nach Material muss ein weicher Bereich verbleiben, um eine Rissbildung zu vermeiden. Entsprechende ungehärtete Bereiche werden auch als Schlupf bezeichnet. Des Weiteren sind jedoch auch induktiv härtbare Stähle mit einem hohen Nickelanteil bekannt, bei welchen auch bei einem Überlapp während des Härtungsprozesses keine Risse auftreten.

Zusätzlich oder alternativ zu einer Härtung der Dichtungslauffläche kann dort auch eine Beschichtung vorgesehen sein. Insbesondere können im Rahmen der Erfindung Beschichtungen vorgesehen sein, welche zu einem besonders geringem Reibwert führen. Dabei ist zu beachten, dass die von der Hauptdichtung ausgeübten Kräfte in der Regel viel kleiner als die Krafteinwirkung auf die Laufbahnen der Kegelrollen ist, so dass auch eine andere Oberflächenbearbeitung und -vergütung möglich ist.

Das Kegelrollenlager kann im Rahmen der Erfindung auf unterschiedliche Weise montiert werden. Bezüglich der Integration in eine Maschine oder Anlage kann wahlweise der Innenring oder der Außenring feststehend montiert werden.

Wenn der Außenring feststehend montiert wird und die Rotationsachse des Kegelrollenlagers horizontal oder in etwa horizontal angeordnet ist, kann der Dichtungslaufring an einer geeigneten, tiefliegenden Stelle auch mit einer Drainagerinne sowie einer Abflussbohrung für Schmiermittel versehen sein.

Eine solche Abflussbohrung ist zweckmäßigerweise ausgehend von den Kegelrollen hinter der Hauptdichtung vorgesehen, um einen Austritt des Schmiermittels im Bereich der Stirnfläche zu vermeiden und dass Schmiermittel kontrolliert ableiten zu können. Insbesondere kann im Rahmen einer solchen Ausgestaltung auch Schmiermittel in Form von Fett oder Öl durch eine geeignete Zuführung in den Lagerspalt nachgefördert werden.

Gemäß einer Weiterbildung der Erfindung ist vorgesehen, dass die Hauptdichtung mit zumindest einem Distanzring montiert ist. Ein Distanzring kann dazu vorgesehen sein, um Hauptdichtungen unterschiedlicher Breite in einem vorgegebenen Aufnahmeraum montieren zu können. Darüber hinaus kann mit zumindest einem Distanzring auch die Lage der Hauptdichtung variiert werden, beispielsweise in Abhängigkeit davon, ob der Distanzring in axialer Richtung gesehen vor oder hinter der Hauptdichtung angeordnet ist. Entsprechend kann auch die Position variiert werden, an der die Hauptdichtung an der zugeordneten Dichtungslauffläche des Dichtungsringes anliegt. Durch eine solche Variation kann im Hinblick auf einen Verschleiß die Standdauer des Kegelrollenlagers noch weiter erhöht werden. Wenn die Dichtungslauffläche lokal an ihrer Verschleißgrenze ist, kann durch eine andere Anordnung des Distanzringes der Anlagepunkt bzw. die Anlagefläche der Hauptdichtung in einen noch nicht verschlissenen Bereich verschoben werden.

Gegenstand der Erfindung ist auch eine Windkraftanlage mit einem auf einen Turm angeordneten Maschinengehäuse und einem Rotorblätter tragenden Rotor, wobei der Rotor mit dem zuvor beschriebenen Kegelrollenlager gegenüber dem Maschinengehäuse drehbar gelagert ist. Das auch als Gondel bezeichnete Maschinengehäuse ist üblicherweise auf dem Turm drehbar angeordnet, um die Längsachse des Rotors entsprechend der jeweiligen Windrichtung nachzuführen.

Grundsätzlich kann das erfindungsgemäße Kegelrollenlager auch für die drehbare Anordnung des Maschinengehäuses auf dem Turm eingesetzt werden. Der Turm kann durch unterschiedliche Bauformen realisiert werden. Der Turm kann beispielsweise aus einem vorgefertigten Mast oder Stahlrohrsegmenten gebildet sein, welche an Flanschverbindungen miteinander verschraubt sind. Zusätzlich sind auch Hybridtürme bekannt, welche aus Stahl und Beton gebildet sind. Des Weiteren können beispielsweise auch die Gitterkonstruktionen eingesetzt werden.

Wie bereits eingangs erläutert, ist bei der erfindungsgemäßen O-Anordnung der beiden Reihen von Kegelrollen der Innenring zumindest in axialer Richtung zweigeteilt, um die Wälzkörper zwischen den Außenring und dem Innenring in der vorgegebenen Schrägstellung montieren zu können.

Die übrigen Ringe, also der Außenring, der an zumindest einer Seite vorgesehene Dichtungslaufring sowie der Klemmring können sowohl in axialer Richtung als auch in Umfangrichtung ungeteilt sein. Selbstverständlich kommen jedoch auch Ringe in Betracht, welche in axialer Richtung und/oder in Umfangrichtung segmentiert sind.

Die Erfindung wird im Folgenden anhand einer lediglich ein Ausführungsbeispiel darstellenden Zeichnung erläutert.

Es zeigen:

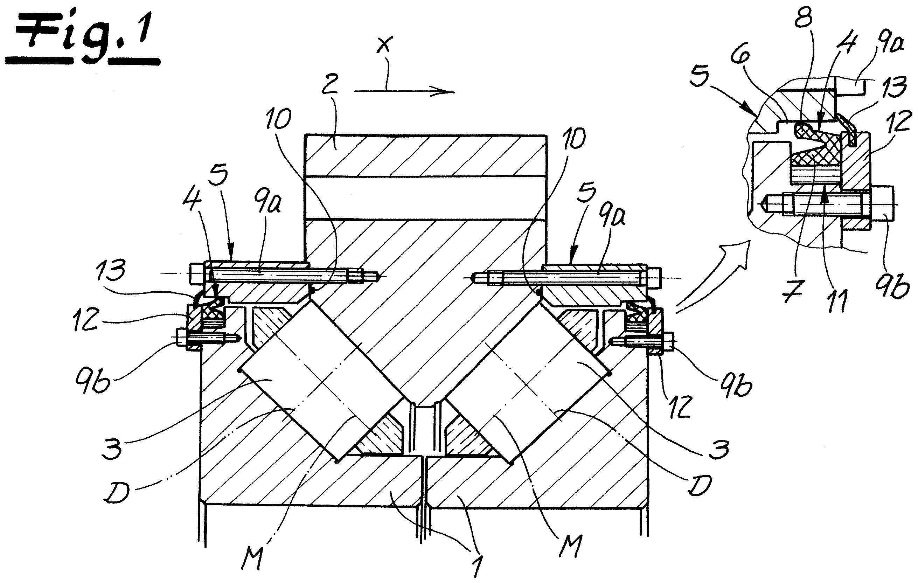

- Fig. 1 bis Fig. 3: verschiedene Ausgestaltungen eines erfindungsgemäßen Kegelrollenlagers in einer Schnittdarstellung

Die Fig. 1 bis Fig. 3 zeigen ein erfindungsgemäßes Kegelrollenlager, welches als Kegelrollengroßwälzlager mit einem Laufkreisdurchmesser von mehr als 500 mm, insbesondere mehr als 1000 mm ausgestaltet ist.

Das Kegelrollenlager umfasst einen in axialer Richtung X geteilten Innenring 1, einen Außenring 2 sowie zwei Reihen von Kegelrollen 3 welche in einer O-Anordnung zwischen dem Innenring 1 und dem Außenring 2 angeordnet sind. Gemäß der O-Anordnung sind die Mittelachsen M der Kegelrollen 3 der beiden Reihen V-förmig angeordnet, wobei sich die Mittelachsen M mit einem Versatz in Richtung des Innenringes 1 schneiden.

Zur besseren Übersichtlichkeit ist nur ein oberer Abschnitt des Kegelrollenlagers in den Figuren dargestellt. Ein unterer Abschnitt des Kegelrollenlagers ergibt sich durch eine Spiegelung des dargestellten Ausschnittes um die horizontal angeordnete Rotationsachse des Kegelrollenlagers. In Bezug auf das gesamte Kegelrollenlager bilden die in der Fig. 1 eingezeichneten Drucklinien D im weitesten Sinne eine O-Form, wodurch die Bezeichnung O-Anordnung resultiert.

Durch die Schrägstellung der Kegelrollen 3 in der O-Anordnung sind die Laufflächen an dem Außenring 1 gegenüber den Laufflächen des Außenrings 2 entlang der axialen Richtung X zu einem mittleren Bereich versetzt. Alleine daraus ergibt sich, dass für die Ausbildung der Laufflächen an dem Innenring 1 eine größere Länge entlang der axialen Richtung X im Vergleich zu dem Außenring 2 notwendig ist. Um Material und Gewicht einzusparen, ist der Außenring 2 möglichst schmal gefertigt.

Ein Spalt zwischen Innenring 1 und Außenring 2 ist an beiden Stirnseiten des Kegelrollenlagers durch jeweils eine Dichtungsanordnung abgedichtet. Erfindungsgemäß umfasst jede Dichtungsanordnung eine drehfest an dem Innenring 1 angeschlossene Hauptdichtung 4 sowie einen an dem Außenring 2 drehfest angeschlossenen Dichtungslaufring 5, der eine Dichtungslauffläche 6 für die Hauptdichtung 4 bildet.

Erfindungsgemäß ist die Dichtungslauffläche 6 also an einem separaten Element in Form des Dichtungslaufringes 5 gebildet, so dass bei einem Schadensfall der Dichtungslauffläche 6 ein Austausch bzw. eine Wartung möglich ist. Die Dichtungslauffläche 6 kann beispielsweise durch Verschließ beeinträchtigt sein. Darüber hinaus kann die Dichtungslauffläche 6 auch bei der Montage beschädigt, beispielsweise zerkratzt werden, wobei im Rahmen der Erfindung dann ein solcher Schaden vergleichsweise leicht behoben werden kann.

Selbst bei einem montierten Kegelrollenlager kann die Dichtungsanordnung mit dem Dichtungslaufring 5 und der Hauptdichtung 4 zumindest bei der dargestellten Ausführungsform entfernt werden, ohne dass das gesamte Kegelrollenlager ausgebaut bzw. zerlegt werden muss.

Es ergibt sich auch der Vorteil, dass der Dichtungslaufring 5 als separates Element aus einem angepassten Material gebildet sein kann. Anders als bei den Laufflächen des Innenrings 1 sowie des Außenringes 2 treten keine hohen punktuellen mechanischen Belastungen auf, wobei jedoch gerade langfristig eine geringe Gleitreibung zwischen der Dichtungslauffläche 6 und der zugeordneten Hauptdichtung 4 angestrebt wird.

Aus der Fig. 1 ist auch ersichtlich, dass der Dichtungslaufring 5 im Vergleich zu dem Innenring 1 und Außenring 2 vergleichsweise klein und leicht ist und so auch bei der Herstellung, Montage und Wartung leichter gehandhabt werden kann. Insbesondere ist es mit weniger Aufwand möglich, die Dichtungslauffläche 6 einer Oberflächenbehandlung oder Oberflächenbeschichtung zu unterziehen. Die Dichtungslauffläche 6 kann beispielsweise gehärtet, insbesondere randschichtgehärtet und/oder mit einer geeigneten Gleitschicht versehen sein.

Die Hauptdichtung 4 ist in dem dargestellten Ausführungsbeispiel nach Art eines Wellendichtrings ausgeführt. Entsprechend weist die Hauptdichtung 4 einen Dichtungsfuß 7 sowie einen an den Dichtungsfuß 7 anschließenden Dichtschenkel 8 auf, der mit seinem Ende an der Dichtungslauffläche 6 anliegt. Der Dichtungslaufring 5 ist durch Schrauben 9a drehfest aber lösbar an dem Außenring 2 angeschlossen, wobei zwischen dem Außenring 2 und dem Dichtungslaufring 5 eine statische Dichtung 10, beispielsweise ein O-Ring in einer zugeordneten Nut angeordnet ist. Die Nut für die statische Dichtung 10 kann wahlweise in dem Außenring 2 oder der zugeordneten Kontaktfläche des Dichtungslaufrings 5 gebildet sein.

Der Innenring 1 weist für die Aufnahme der Hauptdichtung 4 eine stirnseitige Nut 11 auf, wobei die Hauptdichtung 4 in der stirnseitigen Nut 11 durch einen Klemmring 12 oder Klemmsegmente gehalten ist. Der Klemmring 12 ist mit Schrauben 9b an dem Innenring 1 befestigt, wobei die Schrauben 9b in zugeordnete Sackbohrungen eingreifen.

Der Klemmring 12 trägt auch eine Staubschutzdichtung 13, welche die Hauptdichtung 4 vor Verschmutzungen von außen schützt.

Die beschriebenen Merkmale sind bei den Ausführungsformen der Fig. 1 bis 3 übereinstimmend verwirklicht, wobei sich die verschiedenen Ausführungsformen durch die konkrete Ausgestaltung der Dichtungsanordnung unterscheiden.

Gemäß der Fig. 1 befindet sich die Dichtungslauffläche 6 an einem abgestuften Bereich des Dichtungslaufringes 5, um eine Anpassung an die Geometrie der Hauptdichtung 4 zu ermöglichen.

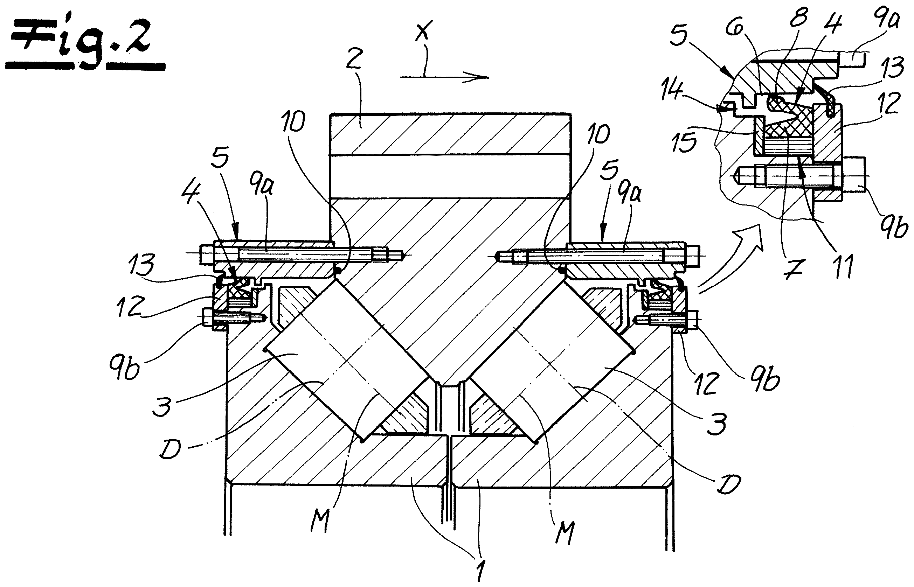

Gemäß der Fig. 2 ist durch zueinander komplementären Ausformungen an den Innenring 1 einerseits und dem Dichtungslaufring 5 andererseits ein Labyrinth 14 gebildet. Zur Ausbildung des Labyrinthes 14 sind an dem Innenring 1 ein nach außen weisender Vorsprung und an dem Dichtungslaufring 5 ein nach innen weisender Vorsprung mit einem axialen Versatz zueinander angeordnet.

Des Weiteren ist in der Fig. 2 als Variante dargestellt, dass für die Klemmung der Hauptdichtung 4 in axialer Richtung X mittels des Klemmringes 12 auch zur Längenanpassung ein Distanzring 15 vorgesehen sein kann.

Gemäß der Ausführungsformen nach Fig. 1 und Fig. 2 weisen die an beiden Stirnseiten des Kegelrollenlagers vorgesehenen Dichtungsanordnungen jeweils eine Hauptdichtung 4 und eine Nebendichtung in Form einer Staubschutzdichtung 13 auf. Eine solche Kombination von Dichtungen ist lediglich exemplarisch. Grundsätzlich können auch zwei Hauptdichtungen 4 in axialer Richtung hintereinander angeordnet werden.

Die Fig. 3 zeigt eine weitere mögliche Variante, bei der für eine verbesserte Abdichtung ein Filzring 16 vorgesehen ist. Der Filzring 16 greift in eine zu der Dichtungslauffläche 6 benachbarten Vertiefung 17 des Dichtungslaufringes 5 ein, wobei der Filzring 16 drehfest an den Innenring 1 angeschlossen ist. Konkret ist der Filzring 16 über einen Zwischenring 18 gemeinsam mit der Hauptdichtung 4 durch den Klemmring 12 in axialer Richtung X festgeklemmt.

## Patentansprüche

1. Kegelrollenlager mit einem Innenring (1), einem Außenring (2) und zwei Reihen von Kegelrollen (3), die in einer O-Anordnung zwischen dem Innenring (1) und dem Außenring (2) angeordnet sind, wobei der Innenring (1) sich in einer axialen Richtung (X) über eine größere Länge als der Außenring (2) erstreckt und wobei ein Spalt zwischen Innenring (1) und Außenring (2) an zumindest einer Seite durch eine Dichtungsanordnung abgedichtet ist, wobei die Dichtungsanordnung eine drehfest an den Innenring (1) angeschlossene Hauptdichtung (4) sowie einen an den Außenring (2) drehfest angeschlossenen Dichtungslaufring (5) aufweist, und wobei der Dichtungslaufring (5) eine Dichtungslauffläche (6') für die Hauptdichtung (4) bildet, **dadurch gekennzeichnet, dass** die Hauptdichtung (4) in eine stirnseitige Nut (11) des Innenrings (1) eingesetzt ist und durch einen Klemmring (12) oder um den Umfang verteilte Klemmsegmente an der zugeordneten Stirnseite des Innenrings (1) gehalten ist und die Dichtungslauffläche von einer radialen Innenfläche des Dichtungslaufringes gebildet ist.

2. Kegelrollenlager nach Anspruch 1, **dadurch gekennzeichnet, dass** der Dichtungslaufring (5) mit dem Außenring (2) verschraubt ist.

3. Kegelrollenlager nach einem der Ansprüche 1 oder 2, **dadurch gekennzeichnet, dass** durch zueinander komplementäre Ausformungen an dem Innenring (1) einerseits und dem Dichtungslaufring (5) andererseits ein Labyrinth (14) gebildet ist.

4. Kegelrollenlager nach einem der Ansprüche 1 bis 3, **dadurch gekennzeichnet, dass** die Dichtungsanordnung zusätzlich zu der Hauptdichtung (4) zumindest eine separate Nebendichtung umfasst.

5. Kegelrollenlager nach Anspruch 4, **dadurch gekennzeichnet, dass** die Hauptdichtung (4) und die zumindest eine separate Nebendichtung durch eine gemeinsame Klemmverbindung gehalten sind.

6. Kegelrollenlager nach einem der Ansprüche 1 bis 5, **dadurch gekennzeichnet, dass** die Hauptdichtung (4) mit elastischem Kunststoff gebildet ist und einen Dichtungsfuß (7) sowie einen an den Dichtungsfuß (7) anschließenden Dichtschenkel (8) aufweist, wobei der Dichtschenkel (8) an der Dichtungslauffläche (6) anliegt.

7. Kegelrollenlager nach Anspruch 6, **dadurch gekennzeichnet, dass** der Dichtschenkel von einer Feder unterstützt ist.

8. Kegelrollenlager nach einem der Ansprüche 1 bis 7, **dadurch gekennzeichnet, dass** die Dichtungslauffläche (6) gehärtet ist.

9. Kegelrollenlager nach einem der Ansprüche 1 bis 8, **dadurch gekennzeichnet, dass** die Dichtungslauffläche (6) mit einer Beschichtung versehen ist.

10. Kegelrollenlager nach einem der Ansprüche 1 bis 9, **dadurch gekennzeichnet, dass** die Hauptdichtung (4) mit zumindest einem Distanzring (15) montiert ist.

11. Windkraftanlage mit einem auf einem Turm angeordneten Maschinengehäuse und einem Rotorblätter tragenden Rotor, wobei der Rotor mit einem Kegelrollenlager nach einem der Ansprüche 1 bis 10 gegenüber dem Maschinengehäuse drehbar gelagert ist.

## Claims

1. A tapered roller bearing comprising an inner ring (1), an outer ring (2), and two rows of tapered rollers (3), which are arranged in an O-arrangement between the inner ring (1) and the outer ring (2), wherein the inner ring (1) extends in an axial direction (X) over a greater length than the outer ring (2), and wherein a gap between inner ring (1) and outer ring (2) on at least one side is sealed by a sealing assembly, wherein the sealing assembly comprises a main seal (4), which is attached to the inner ring (1) in a rotationally fixed manner, as well as a seal race ring (5), which is attached to the outer ring (2) in a rotationally fixed manner, and wherein the seal race ring (5) forms a seal raceway (6) for the main seal (4), **characterized in that** the main seal (4) is inserted into a groove (11) on the front side of the inner ring (1) and is held on the associated front side of the inner ring (1) by a clamping ring (12) or clamping segments distributed around the circumference, and **in that** the seal raceway is formed by a radial inner surface of the seal race ring.

2. The tapered roller bearing as claimed in claim 1, **characterized in that** the seal race ring (5) is screwed to the outer ring (2).

3. The tapered roller bearing as claimed in one of claims 1 or 2, **characterized in that** a labyrinth (14) is formed by moldings, which are complementary to one another, on the inner ring (1) on the one hand and the seal race ring (5) on the other hand.

4. The tapered roller bearing as claimed in one of claims 1 to 3, **characterized in that**, in addition to the main seal (4), the sealing assembly comprises at least one separate secondary seal.

5. The tapered roller bearing as claimed in claim 4, **characterized in that** the main seal (4) and the at least one separate secondary seal are held by a joint clamping connection.

6. The tapered roller bearing as claimed in one of claims 1 to 5, **characterized in that** the main seal (4) is formed with elastic plastic and comprises a sealing foot (7) as well as a sealing leg (8) adjoining the sealing foot (7), wherein the sealing leg (8) lies against the seal raceway (6).

7. The tapered roller bearing as claimed in claim 6, **characterized in that** the sealing leg is supported by a spring.

8. The tapered roller bearing as claimed in one of claims 1 to 7, **characterized in that** the seal raceway (6) is hardened.

9. The tapered roller bearing as claimed in one of claims 1 to 8, **characterized in that** the seal raceway (6) is provided with a coating.

10. The tapered roller bearing as claimed in one of claims 1 to 9, **characterized in that** the main seal (4) is mounted with at least one spacer ring (15).

11. A wind turbine comprising a machine housing arranged on a tower, and a rotor supporting rotor blades, wherein the rotor is rotationally supported with respect to the machine housing by means of a tapered roller bearing as claimed in one of claims 1 to 10.

## Revendications

1. Palier à rouleaux coniques comprenant une bague intérieure (1), une bague extérieure (2) et deux rangées de rouleaux coniques (3) qui sont disposés suivant un agencement en O entre la bague intérieure (1) et la bague extérieure (2), la bague intérieure (1) s'étendant dans une direction axiale (X) sur une plus grande longueur que la bague extérieure (2) et un espace ménagé entre la bague intérieure (1) et la bague extérieure (2) étant rendu étanche sur au moins un côté par un ensemble de garnitures d'étanchéité, l'ensemble de garnitures d'étanchéité comportant une garniture d'étanchéité principale (4) raccordée solidairement en rotation à la bague intérieure (1) et une bague de contact de garniture d'étanchéité (5) raccordée solidairement en rotation à la bague extérieure (2), et la bague de contact de garniture d'étanchéité (5) formant une surface de contact de garniture d'étanchéité (6') destinée à la garniture d'étanchéité principale (4), **caractérisé en ce que** la garniture d'étanchéité principale (4) est insérée dans une rainure côté frontal (11) de la bague intérieure (1) et est maintenue par une bague de serrage (12) ou des segments de serrage, répartis sur la circonférence, sur le côté frontal associé de la bague intérieure (1) et la surface de contact de garniture d'étanchéité est formée par une surface intérieure radiale de la bague de contact de garniture d'étanchéité.

2. Palier à rouleaux coniques selon la revendication 1, **caractérisé en ce que** la bague de contact de garniture d'étanchéité (5) est vissée à la bague extérieure (2).

3. Palier à rouleaux coniques selon l'une des revendications 1 et 2, **caractérisé en ce qu'**un labyrinthe (14) est formé par des formations mutuellement complémentaires sur la bague intérieure (1) d'une part et la bague de contact de garniture d'étanchéité (5) d'autre part.

4. Palier à rouleaux coniques selon l'une des revendications 1 à 3, **caractérisé en ce que** l'ensemble de garnitures d'étanchéité comprend au moins une garniture d'étanchéité secondaire séparée en plus de la garniture d'étanchéité principale (4).

5. Palier à rouleaux coniques selon la revendication 4, **caractérisé en ce que** la garniture d'étanchéité principale (4) et l'au moins une garniture d'étanchéité secondaire séparée sont maintenues par une liaison de serrage commune.

6. Palier à rouleaux coniques selon l'une des revendications 1 à 5, **caractérisé en ce que** la garniture d'étanchéité principale (4) est réalisée en matière synthétique élastique et comporte une base (7) et une branche (8) se raccordant à la base (7), la branche (8) venant en appui sur la surface de contact de garniture d'étanchéité (6).

7. Palier à rouleaux coniques selon la revendication 6, **caractérisé en ce que** la branche est supportée par un ressort.

8. Palier à rouleaux coniques selon l'une des revendications 1 à 7, **caractérisé en ce que** la surface de contact de garniture d'étanchéité (6) est durcie.

9. Palier à rouleaux coniques selon l'une des revendications 1 à 8, **caractérisé en ce que** la surface de contact de garniture d'étanchéité (6) est pourvue d'un revêtement.

10. Palier à rouleaux coniques selon l'une des revendications 1 à 9, **caractérisé en ce que** la garniture d'étanchéité principale (4) est montée avec au moins une bague d'espacement (15).

11. Éolienne comportant un carter de machine disposé sur une tour et un rotor portant des pales de rotor, le rotor étant monté avec un palier à rouleaux coniques selon l'une des revendications 1 à 10 de manière rotative par rapport au carter de machine.
